# EUROPÄISCHE PATENTSCHRIFT

(11) **EP 3 815 483 B1**
(45) Veröffentlichungstag und Bekanntmachung des Hinweises auf die Patenterteilung: **10.07.2024**
(21) Anmeldenummer: 20198131.3
(22) Anmeldetag: 24.09.2020
(51) Int. Cl.: A01B 59/00, A01B 59/043, A01B 59/06

(54) **DREIPUNKT-KRAFTHEBER FÜR EINEN LANDWIRTSCHAFTLICHEN TRAKTOR**
THREE POINT POWER LIFT FOR AN AGRICULTURAL TRACTOR
RELEVAGE TROIS POINTS POUR UN TRACTEUR AGRICOLE

(30) Priorität: 30.10.2019 DE 102019216733
(43) Veröffentlichungstag der Anmeldung: 05.05.2021
(73) Patentinhaber: Deere & Company, Moline, IL 61265 (US)
(72) Erfinder: HINGNE, Abhijit, 68163 Mannheim (DE); SCHIBEL, Achim, 68163 Mannheim (DE)
(74) Vertreter: Dehnhardt, Florian Christopher

(56) Entgegenhaltungen:
- EP-A1- 1 332 657
- EP-A1- 2 671 440
- EP-A1- 3 549 417
- DE-A1- 2 147 286
- DE-A1- 2 223 888
- US-A- 6 149 180

## Beschreibung

Die Erfindung betrifft einen Dreipunkt-Kraftheber für einen landwirtschaftlichen Traktor, mit einem hydraulisch betätigbaren Hubarm, einem vertikalschwenkbar ausgebildeten Unterlenker und einer dazwischen angeordneten Hubstrebe zur Übertragung einer an dem Hubarm ausgeführten Schwenkbewegung auf den Unterlenker, wobei die Hubstrebe einen an dem Hubarm angelenkten ersten Befestigungsabschnitt und einen an dem Unterlenker angelenkten zweiten Befestigungsabschnitt mit ersten und zweiten Befestigungssegmenten aufweist, die den Unterlenker gabelförmig umgreifen, wie z.B. aus der EP3549417A und der EP1332657A bekannt.

Genauer gesagt umfasst ein derartiger Dreipunkt-Kraftheber, wie er üblicherweise im Heckbereich eines landwirtschaftlichen Traktors angeordnet ist, im Allgemeinen ein hydraulisch betätigbares Hubwerk mit linken und rechten Hubarmen, die sich mittels zugehöriger Hydraulikzylinder auf- und abwärts schwenken lassen, sowie linke und rechte Unterlenker, die an unteren Befestigungsstellen des Dreipunkt-Krafthebers vertikalschwenkbar gelagert und über längenverstellbare Hubstreben mit den Hubarmen bewegungsverbunden sind. Des Weiteren ist ein zentraler Oberlenker vorhanden, der an einer oberen Befestigungsstelle des Dreipunkt-Krafthebers vertikalschwenkbar aufgehängt ist. Sowohl die Unterlenker wie auch der Oberlenker weisen Kupplungshaken zur Aufnahme komplementärer Befestigungselemente eines an dem Dreipunkt-Kraftheber anzubringenden Anbaugeräts auf.

An jeder der Hubstreben ist ein an dem betreffenden Hubarm angelenkter erster Befestigungsabschnitt und ein an dem Unterlenker angelenkter zweiter Befestigungsabschnitt mit ersten und zweiten Befestigungssegmenten vorgesehen, die den Unterlenker gabelförmig umgreifen. Der Unterlenker ist mittels eines abnehmbaren Haltebolzens, der von einem in den Befestigungssegmenten ausgebildeten Langloch aufgenommen ist, an der Hubstrebe montiert, wobei das Langloch der Bereitstellung eines vertikalen Bewegungsfreiheitsgrads, mithin der Verwirklichung einer entsprechenden Schwimmstellung dient. Dies ist bei Betrieb bestimmter bodeneingreifender Anbaugeräte zum Ausgleich von Bodenunebenheiten, wie sie beim Bearbeiten eines Felds auftreten, erforderlich. Daneben ist es möglich, den Unterlenker innerhalb des Langlochs in einer unteren Stellung mittels des Haltebolzens festzulegen.

In aller Regel befindet sich zwischen den beiden Unterlenkern ein Zugmaul oder eine vergleichbare Kupplungseinrichtung zur Anbringung einer Anhängedeichsel gezogener Zusatzgeräte, also beispielsweise eines Anhängers, Heuladewagens oder dergleichen. Bei der Durchführung von Transportfahrten ist zur Verringerung des Wenderadius beim Rangieren ein möglichst großer Seitenfreiraum zwischen der Anhängedeichsel und den Unterlenkern erwünscht. Die Unterlenker werden in einem solchen Fall mittels des hydraulischen Hubwerks in eine möglichst weit angehobene Stellung verbracht.

Es ist Aufgabe der vorliegenden Erfindung, einen Dreipunkt-Kraftheber der eingangs genannten Art anzugeben, der eine zusätzliche Vergrößerung des Seitenfreiraums einer zwischen den Unterlenkern verlaufenden Anhängedeichsel zulässt.

Diese Aufgabe wird durch einen Dreipunkt-Kraftheber für einen landwirtschaftlichen Traktor mit den Merkmalen des Patentanspruchs 1 gelöst.

Der Dreipunkt-Kraftheber für einen landwirtschaftlichen Traktor umfasst einen hydraulisch betätigbaren Hubarm, einen vertikalschwenkbar ausgebildeten Unterlenker und eine dazwischen angeordnete Hubstrebe zur Übertragung einer an dem Hubarm ausgeführten Schwenkbewegung auf den Unterlenker, wobei die Hubstrebe einen an dem Hubarm angelenkten ersten Befestigungsabschnitt und einen an dem Unterlenker angelenkten zweiten Befestigungsabschnitt mit ersten und zweiten Befestigungssegmenten aufweist, die den Unterlenker gabelförmig umgreifen. Hierbei erstreckt sich ein zwischen den beiden Befestigungssegmenten verlaufender Lagerbolzen derart durch einen im Unterlenker ausgebildeten Längsschlitz, dass der Lagerbolzen sich unter Verschwenken des Unterlenkers innerhalb des Längsschlitzes zwischen einer ersten Arbeitsposition und einer zweiten Arbeitsposition verschieben und jeweils darin mittels einer Arretierungsanordnung festlegen lässt.

Allgemein gesprochen erlaubt die Arretierungsanordnung ein Verstellen des Anlenkpunkts der Hubstrebe am Unterlenker, sodass sich der Unterlenker zum Zwecke der Vergrößerung des Seitenfreiraums einer zwischen den Unterlenkern verlaufenden Anhängedeichsel zusätzlich um den durch den Längsschlitz geschaffenen Schwenkfreiraum anheben und in dieser Stellung arretieren lässt. Mit anderen Worten entspricht die erste Arbeitsposition einer herkömmlichen, d.h. zum Betrieb eines Anbaugeräts vorgesehenen Betriebsstellung und die zweite Arbeitsposition einer für einen Transportbetrieb vorgesehenen Transportstellung der Unterlenker.

Vorteilhafte Ausgestaltungen des erfindungsgemäßen Dreipunkt-Krafthebers gehen aus den Unteransprüchen hervor.

Vorzugsweise weist die Arretierungsanordnung eine Halterung mit beidseits des Unterlenkers verlaufenden Montagewangen auf, durch die der Lagerbolzen sowie ein davon beabstandeter Arretierungsbolzen hindurchgesteckt ist, wobei der Abstand zwischen Lagerbolzen und Arretierungsbolzen mit den Abmessungen des Längsschlitzes derart korrespondiert, dass in der ersten Arbeitsposition der Lagerbolzen an einem ersten Endbereich des Längsschlitzes und der Arretierungsbolzen an einem zweiten Endbereich des Längsschlitzes im Wesentlichen spielfrei anliegt. Eine Verschiebung der Halterung entlang des Längsschlitzes wird in diesem Fall durch die beiden Bolzen blockiert, die Halterung ist somit in der ersten Arbeitsposition verlässlich gesichert.

Zusätzlich besteht die Möglichkeit, dass in der zweiten Arbeitsposition der Lagerbolzen an dem zweiten Endbereich des Längsschlitzes im Wesentlichen spielfrei anliegt und der Arretierungsbolzen zugleich durch eine in dem Unterlenker ausgebildete Arretierungsbohrung hindurchgesteckt ist. Der Durchmesser der Arretierungsbohrung ist so gewählt, dass der Arretierungsbolzen darin im Wesentlichen spielfrei aufgenommen ist. Insofern ist die Halterung auch in der zweiten Arbeitsposition verlässlich gesichert.

Zum Wechsel der Arbeitsposition ist also lediglich der Arretierungsbolzen aus der Halterung zu entfernen. Anschließend lässt sich die Halterung in ihre jeweils andere Arbeitsposition verbringen und durch Wiedermontage des Arretierungsbolzens sichern. Da sich der Lagerbolzen währenddessen weiterhin in der Halterung befindet, mithin Hubstrebe und Unterlenker miteinander verbunden bleiben, wird eine Handhabung des vergleichsweise schweren bzw. unhandlichen Unterlenkers beim Umsetzen zwischen der Betriebs- und Transportstellung maßgeblich erleichtert.

Der im Unterlenker angeordnete Längsschlitz kann als erstes Langloch ausgebildet sein, innerhalb dessen der Lagerbolzen beim Verschieben der Halterung zwischen den beiden Arbeitspositionen im Wesentlichen spielfrei geführt wird. Der Lagerbolzen kann zugleich der Montage des Unterlenkers in einem in den Befestigungssegmenten ausgebildeten zweiten Langloch dienen. Das zweite Langloch erlaubt die Bereitstellung eines vertikalen Bewegungsfreiheitsgrads, mithin einer für den Betrieb bestimmter bodeneingreifender Anbaugeräte erforderlichen Schwimmstellung.

Des Weiteren können die beiden Montagewangen der Halterung im Bereich eines den Unterlenker zumindest einseitig umgreifenden Brückenabschnitts starr miteinander verbunden sein. Dies erleichtert die Handhabung der Halterung beim Wechsel zwischen den beiden Arbeitspositionen, da sich die beiden Montagewangen bei Fehlen des Arretierungsbolzens nicht lose voneinander um den Lagerbolzen bewegen können.

Hierbei kann die Halterung einschließlich des Brückenabschnitts eine mit einer Außenkontur des Unterlenkers korrespondierende Innenkontur derart aufweisen, dass diese beim Verschieben des Lagerbolzens innerhalb des Längsschlitzes entlang des Unterlenkers geführt wird. Genauer gesagt verlaufen die Innenseiten der Montagewangen wie auch des Brückenabschnitts dann zumindest im Verschiebebereich weitgehend spielfrei entlang der Außenseite des Unterlenkers. Der Brückenabschnitt kann sich insbesondere im Bereich einer Oberseite des Unterlenkers erstrecken und dort die Halterung derart abstützen, dass diese korrespondierend mit dem Verlauf des Längsschlitzes geführt und damit ein Auffinden der jeweiligen Arbeitsposition im Sinne einer problemlosen Montage des Arretierungsbolzens unterstützt wird.

Typischerweise ist die Halterung als aus einer Stahllegierung bestehendes einstückiges Guss- und/oder Schmiedeteil ausgebildet. Die zur Aufnahme des Lager- bzw. Arretierungsbolzens vorgesehenen Bohrungen bzw. Passungen sind spanabhebend nachgearbeitet.

Auch ist es möglich, dass sich der Arretierungsbolzen erst nach Lösen eines Sicherungselements aus der Halterung entfernen lässt. Ein unbeabsichtigtes Herausfallen aus der zugehörigen Bohrung bzw. Passung aufgrund fahrtbedingter Vibrationen oder dergleichen kann so zuverlässig unterbunden werden. Bei dem Sicherungselement handelt es sich im einfachsten Fall um einen von Hand abnehmbaren Splint, der im Bereich eines freien Endes durch den Arretierungsbolzen hindurchgesteckt ist.

Der erfindungsgemäße Dreipunkt-Kraftheber für einen landwirtschaftlichen Traktor wird im Folgenden anhand der beigefügten Zeichnungen näher erläutert. Hierbei sind übereinstimmende bzw. bezüglich ihrer Funktion vergleichbare Komponenten mit denselben Bezugszeichen gekennzeichnet. Es zeigen:
- Fig. 1: einen schematisch dargestellten Dreipunkt-Kraftheber für einen landwirtschaftlichen Traktor mit einer Arretierungsanordnung zum Verstellen des Anlenkpunkts einer Hubstrebe an einem Unterlenker,
- Fig. 2: eine Darstellung einer von der Arretierungsanordnung gemäß Fig. 1 umfassten Halterung,
- Fig. 3: eine Detaildarstellung der von dem Dreipunkt-Kraftheber gemäß Fig. 1 umfassten Arretierungseinrichtung,
- Fig. 4: eine Seitenansicht der in Fig. 1 wiedergegebenen Arretierungsanordnung mit einer in einer ersten Arbeitsposition befindlichen Halterung, und
- Fig. 5: eine Seitenansicht der in Fig. 1 wiedergegebenen Arretierungsanordnung, mit einer in einer zweiten Arbeitsposition befindlichen Halterung.

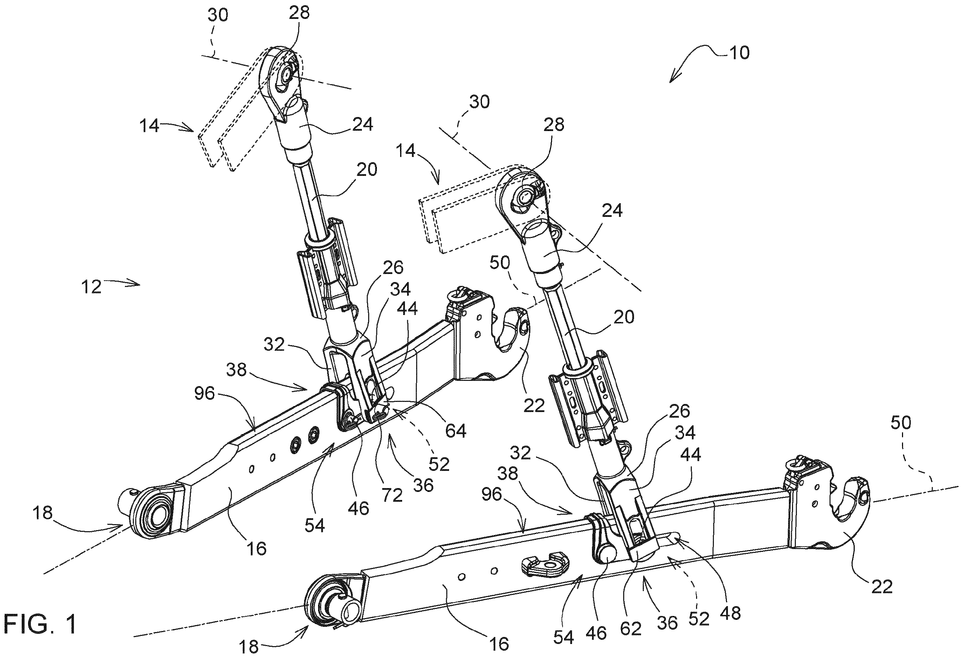

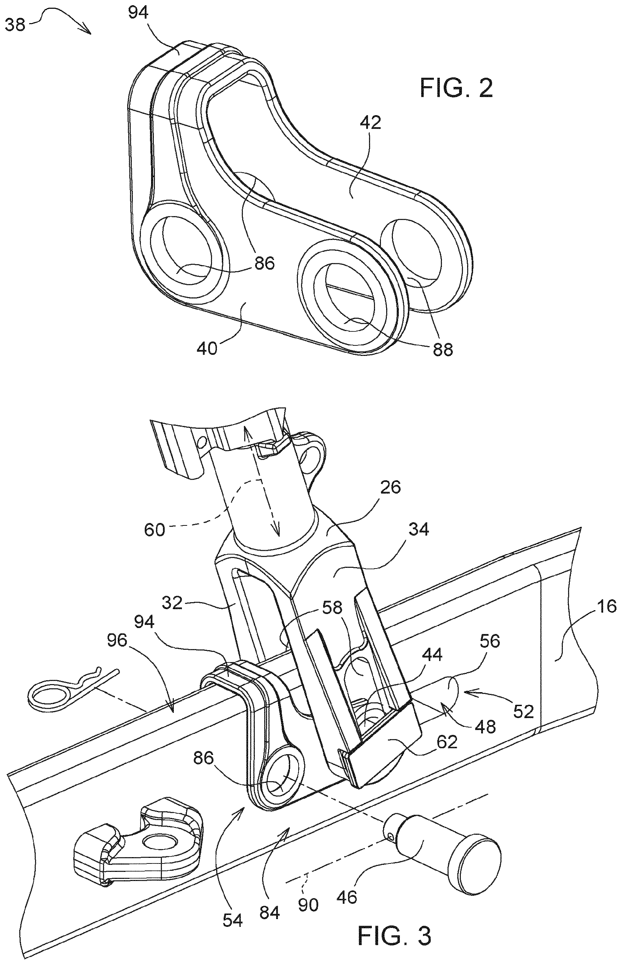

Fig. 1 zeigt in einer schematischen Teildarstellung ein Ausführungsbeispiel des erfindungsgemäßen Dreipunkt-Krafthebers, wobei dieser nachfolgend unter Bezugnahme auf die Detailansichten in Fig. 2 bis 5 erläutert werden soll. Aus Gründen der Übersichtlichkeit sind lediglich die erfindungswesentlichen Bestandteile des Dreipunkt-Krafthebers dargestellt. Dies gilt gleichermaßen für ein zwischen zugehörigen Unterlenkern befindliches Zugmaul oder eine vergleichbare Kupplungseinrichtung, an der sich eine Anhängedeichsel gezogener Zusatzgeräte, also beispielsweise eines Anhängers, Heuladewagens oder dergleichen anbringen lässt.

Der im Heckbereich eines (nicht wiedergegebenen) landwirtschaftlichen Traktors angeordnete Dreipunkt-Kraftheber 10 umfasst ein hydraulisch betätigbares Hubwerk 12 mit linken und rechten Hubarmen 14, die sich mittels zugehöriger Hydraulikzylinder (nicht gezeigt) auf- und abwärts schwenken lassen, sowie linke und rechte Unterlenker 16, die an unteren Befestigungsstellen 18 des Dreipunkt-Krafthebers 10 vertikalschwenkbar gelagert und über längenverstellbare Hubstreben 20 mit den Hubarmen 14 bewegungsverbunden sind, um eine an den Hubarmen 14 ausgeführte Schwenkbewegung auf die Unterlenker 16 zu übertragen.

Entgegen der Darstellung in Fig. 1 umfasst der Dreipunkt-Kraftheber 10 des Weiteren einen zentralen Oberlenker, der an einer oberen Befestigungsstelle des Dreipunkt-Krafthebers 10 vertikalschwenkbar aufgehängt ist. Sowohl die Unterlenker 16 wie auch der Oberlenker weisen Kupplungshaken 22 zur Aufnahme komplementärer Befestigungselemente eines an dem Dreipunkt-Kraftheber 10 anzubringenden Anbaugeräts auf.

An jeder der Hubstreben 20 ist ein an dem zugehörigen Hubarm 14 angelenkter erster Befestigungsabschnitt 24 und ein an dem Unterlenker 16 angelenkter zweiter Befestigungsabschnitt 26 vorgesehen. Bei dem ersten Befestigungsabschnitt 24 handelt es sich um ein Befestigungsauge 28, das mittels eines Gelenkbolzens 30 in einem Endbereich des Hubarms 14 montiert ist, wohingegen der zweite Befestigungsabschnitt 26 erste und zweite Befestigungssegmente 32, 34 aufweist, die den Unterlenker 16 gabelförmig umgreifen.

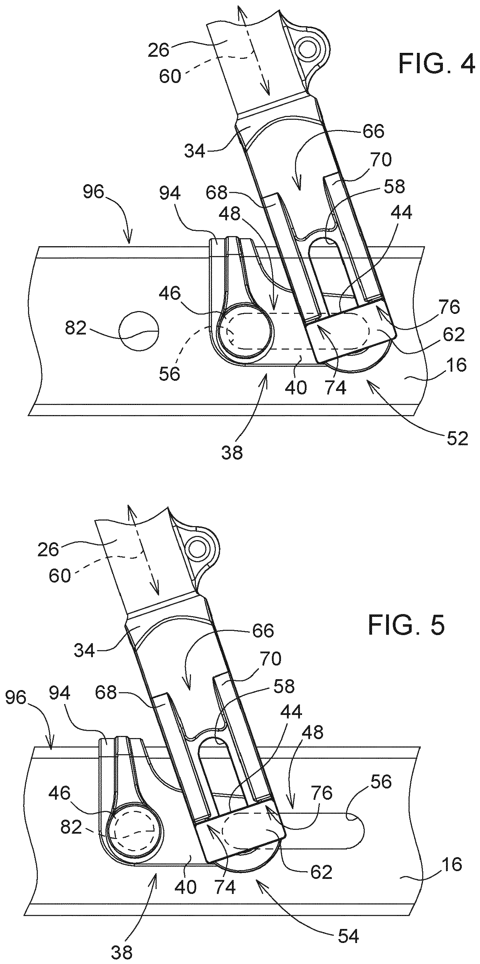

Des Weiteren ist an jedem der beiden Unterlenker 16 eine identisch aufgebaute Arretierungsanordnung 36 zum Verstellen des Anlenkpunkts der Hubstrebe 20 am Unterlenker 16 vorgesehen. Die Arretierungsanordnung 36 weist eine Halterung 38 mit beidseits des Unterlenkers 16 verlaufenden Montagewangen 40, 42 auf (siehe Fig. 2), durch die ein von Hand abnehmbarer Lagerbolzen 44 sowie ein davon beabstandeter ebenfalls von Hand abnehmbarer Arretierungsbolzen 46 hindurchgesteckt ist. Der Lagerbolzen 44 erstreckt sich durch einen in dem Unterlenker 16 angeordneten Längsschlitz 48, der in Richtung einer Längsachse 50 des Unterlenkers 16 orientiert ist. Ist der Arretierungsbolzen 46 entfernt (siehe Fig. 3), lässt sich die Halterung 38 zum Verstellen des Anlenkpunkts zwischen einer ersten Arbeitsposition 52 (siehe Fig. 4) und einer zweiten Arbeitsposition 54 (siehe Fig. 5) verschieben.

Der im Unterlenker 16 angeordnete Längsschlitz 48 ist dabei als erstes Langloch 56 ausgebildet, innerhalb dessen der Lagerbolzen 44 beim Verschieben der Halterung 38 zwischen den beiden Arbeitspositionen 52, 54 im Wesentlichen spielfrei geführt wird. Der Lagerbolzen 44 dient zugleich der Montage des Unterlenkers 16 in einem in den Befestigungssegmenten 32, 34 ausgebildeten zweiten Langloch 58. Das zweite Langloch 58 erlaubt die Bereitstellung eines vertikalen Bewegungsfreiheitsgrads 60, mithin einer für den Betrieb bestimmter bodeneingreifender Anbaugeräte erforderlichen Schwimmstellung. Hierzu wird der Lagerbolzen 44 von Hand derart positioniert, dass eine an diesem stirnseitig vorgesehene Vierkantscheibe 62, 64 in einem Führungsbereich 66, der durch entlang des zweiten Langlochs 58 an den Befestigungssegmenten 32, 34 hervorspringende Wangen 68, 70 definiert ist, zu liegen kommt. Die Vierkantscheibe 62, 64 kann sich dann frei zwischen den beiden Wangen 68, 70 entlang des zweiten Langlochs 58 hin und her bewegen. Um ein Abnehmen des Lagerbolzens 44 zu ermöglichen, ist die Vierkantscheibe 62, 64 auf einer der beiden Seiten des Lagerbolzens 44 von Hand lösbar aufgesteckt und dort mittels eines Splints 72 gesichert. Soll der Unterlenker 16 hingegen innerhalb des zweiten Langlochs 58 festgelegt werden, wird der abnehmbare Lagerbolzen 44 derart positioniert, dass die Vierkantscheine 62, 64 quer mit einem unteren Stirnbereich 74, 76 der beiden Wangen 68, 70 in Anlage gebracht wird. Diese Situation ist unter anderem in Fig. 3 abgebildet.

Der Abstand zwischen Lagerbolzen 44 und Arretierungsbolzen 46 korrespondiert mit den Abmessungen des ersten Langlochs 56 derart, dass in der in Fig. 4 wiedergegebenen ersten Arbeitsposition 52 der Lagerbolzen 44 an einem ersten Endbereich 78 des ersten Langlochs 56 und der Arretierungsbolzen 46 an einem zweiten Endbereich 80 des ersten Langlochs 56 anliegt. Das erste Langloch 56 ist in Fig. 4 von der Halterung 38 verdeckt und daher gestrichelt dargestellt. Eine Verschiebung der Halterung 38 entlang des ersten Langlochs 56 wird in diesem Fall durch die beiden Bolzen 44, 46 blockiert, die Halterung 38 ist somit in der ersten Arbeitsposition 52 verlässlich gesichert.

Andererseits liegt der Lagerbolzen 44 in der in Fig. 5 wiedergegebenen zweiten Arbeitsposition 54 an dem zweiten Endbereich 80 des ersten Langlochs 56 an und der Arretierungsbolzen 46 ist zugleich durch eine in dem Unterlenker 16 ausgebildete Arretierungsbohrung 82 hindurchgesteckt. Die Arretierungsbohrung 82 wie auch ein Teil des ersten Langlochs 56 sind in Fig. 5 von der Halterung 38 verdeckt und daher gestrichelt dargestellt. Der Durchmesser der Arretierungsbohrung 82 ist so gewählt, dass der Arretierungsbolzen 46 darin im Wesentlichen spielfrei aufgenommen ist. Insofern ist die Halterung 38 auch in der zweiten Arbeitsposition 54 verlässlich gesichert.

Aus fertigungstechnischen Gründen sowie zur Sicherstellung einer ausreichenden Toleranz gegenüber Schmutzablagerungen wird der Lagerbolzen 44 bzw. Arretierungsbolzen 46 meist nicht unmittelbar am jeweiligen Endbereich 78, 80 des ersten Langlochs 56 anliegen, sondern vielmehr ein gewisses, jedoch für die zu erfüllende Sicherungsfunktion unmaßgebliches Spiel aufweisen. Gleiches gilt in der zweiten Arbeitsposition 54 für den in der Arretierungsbohrung 82 aufgenommenen Arretierungsbolzen 46.

Zum Wechsel der Arbeitsposition 52, 54 ist also lediglich der Arretierungsbolzen 46 aus der Halterung 38 zu entfernen. Anschließend lässt sich die Halterung 38 von Hand in ihre jeweils andere Arbeitsposition 54, 52 verbringen und durch Wiedermontage des Arretierungsbolzens 46 sichern. Dieser Vorgang ist in Fig. 3 veranschaulicht. Da sich der Lagerbolzen 44 währenddessen weiterhin in der Halterung 38 befindet, mithin Hubstrebe 20 und Unterlenker 16 miteinander verbunden bleiben, wird eine Handhabung des vergleichsweise schweren bzw. unhandlichen Unterlenkers 16 beim Verstellen des Anlenkpunkts maßgeblich erleichtert.

Auch ist es möglich, dass sich der Arretierungsbolzen 46 erst nach Lösen eines Sicherungselements 84 aus der Halterung 38 entfernen lässt. Ein unbeabsichtigtes Herausfallen aus der zugehörigen Bohrung bzw. Passung 86, 88 aufgrund fahrtbedingter Vibrationen oder dergleichen kann so zuverlässig unterbunden werden. Bei dem Sicherungselement 84 handelt es sich im einfachsten Fall um einen von Hand abnehmbaren Splint 90, der im Bereich eines freien Endes 92 durch den Arretierungsbolzen 46 hindurchgesteckt ist.

Mit anderen Worten ermöglicht es die Arretierungsanordnung 36, den Unterlenker 16 zum Zwecke der Vergrößerung des Seitenfreiraums einer zwischen den Unterlenkern 16 verlaufenden Anhängedeichsel zusätzlich um den durch das erste Langloch 56 geschaffenen Schwenkfreiraum anzuheben und in dieser Stellung zu arretieren.

Vorliegend sind die beiden 40, 42 der Halterung 38 im Bereich eines den Unterlenker 16 zumindest einseitig umgreifenden Brückenabschnitts 94 starr miteinander verbunden. Dies erleichtert zusätzlich die Handhabung der Halterung 38 beim Wechsel zwischen den beiden Arbeitspositionen 52, 54, da sich die beiden Montagewangen 40, 42 bei Fehlen des Arretierungsbolzens 46 nicht lose voneinander um den Lagerbolzen 44 bewegen können.

Die Halterung 38 einschließlich des Brückenabschnitts 94 weist eine mit einer Außenkontur des Unterlenkers 16 korrespondierende Innenkontur derart auf, dass diese beim Verschieben des Lagerbolzens 44 innerhalb des ersten Langlochs 56 entlang des Unterlenkers 16 geführt wird. Genauer gesagt verlaufen die Innenseiten der Montagewangen 40, 42 wie auch des Brückenabschnitts 94 dann zumindest im Verschiebebereich weitgehend spielfrei entlang der Außenseite des Unterlenkers 16. Der Brückenabschnitt 94 erstreckt sich im Bereich einer Oberseite 96 des Unterlenkers 16 und stützt dort die Halterung 38 derart ab, dass diese korrespondierend mit dem Verlauf des ersten Langlochs 56 geführt und damit ein Auffinden der jeweiligen Arbeitsposition 52, 54 im Sinne einer problemlosen Montage des Arretierungsbolzens 46 unterstützt wird.

Die Außenkonturen der beiden Unterlenker 16 stimmen zumindest im Verschiebebereich miteinander überein, sodass für beide Seiten die gleiche Halterung 38 verwendbar ist.

Die Halterung 38 ist als aus einer Stahllegierung bestehendes einstückiges Guss- und/oder Schmiedeteil ausgebildet. Die zur Aufnahme des Lager- bzw. Arretierungsbolzens 44, 46 vorgesehenen Bohrungen bzw. Passungen 86, 88 sind spanabhebend nachgearbeitet.

## Patentansprüche

1. Dreipunkt-Kraftheber für einen landwirtschaftlichen Traktor, mit einem hydraulisch betätigbaren Hubarm (14), einem vertikalschwenkbar ausgebildeten Unterlenker (16) und einer dazwischen angeordneten Hubstrebe (20) zur Übertragung einer an dem Hubarm (14) ausgeführten Schwenkbewegung auf den Unterlenker (16), wobei die Hubstrebe (20) einen an dem Hubarm (14) angelenkten ersten Befestigungsabschnitt (24) und einen an dem Unterlenker (16) angelenkten zweiten Befestigungsabschnitt (26) mit ersten und zweiten Befestigungssegmenten (32, 34) aufweist, die den Unterlenker (16) gabelförmig umgreifen, **dadurch gekennzeichnet, dass** sich ein zwischen den beiden Befestigungssegmenten (32, 34) verlaufender Lagerbolzen (44) derart durch einen im Unterlenker (16) ausgebildeten Längsschlitz (48) erstreckt, dass der Lagerbolzen (44) sich unter Verschwenken des Unterlenkers (16) innerhalb des Längsschlitzes (48) zwischen einer ersten Arbeitsposition (52) und einer zweiten Arbeitsposition (54) verschieben und jeweils darin mittels einer Arretierungsanordnung (36) festlegen lässt.

2. Dreipunkt-Kraftheber nach Anspruch 1, **dadurch gekennzeichnet, dass** die Arretierungsanordnung (36) eine Halterung (38) mit beidseits des Unterlenkers (16) verlaufenden Montagewangen (40, 42) aufweist, durch die der Lagerbolzen (44) sowie ein davon beabstandeter Arretierungsbolzen (46) hindurchgesteckt ist, wobei der Abstand zwischen Lagerbolzen (44) und Arretierungsbolzen (46) mit den Abmessungen des Längsschlitzes (48) derart korrespondiert, dass in der ersten Arbeitsposition (52) der Lagerbolzen (44) an einem ersten Endbereich (78) des Längsschlitzes (48) und der Arretierungsbolzen (46) an einem zweiten Endbereich (80) des Längsschlitzes (48) im Wesentlichen spielfrei anliegt.

3. Dreipunkt-Kraftheber nach Anspruch 2, **dadurch gekennzeichnet, dass** in der zweiten Arbeitsposition (54) der Lagerbolzen (44) an dem zweiten Endbereich (80) des Längsschlitzes (48) im Wesentlichen spielfrei anliegt und der Arretierungsbolzen (46) zugleich durch eine in dem Unterlenker (16) ausgebildete Arretierungsbohrung (82) hindurchgesteckt ist.

4. Dreipunkt-Kraftheber nach Anspruch 2 oder 3, **dadurch gekennzeichnet, dass** der im Unterlenker (16) angeordnete Längsschlitz (48) als erstes Langloch (56) ausgebildet ist, innerhalb dessen der Lagerbolzen (44) beim Verschieben der Halterung (38) zwischen den beiden Arbeitspositionen (52, 54) im Wesentlichen spielfrei geführt wird.

5. Dreipunkt-Kraftheber nach Anspruch 4, **dadurch gekennzeichnet, dass** der Lagerbolzen (44) zugleich der Montage des Unterlenkers (16) in einem in den Befestigungssegmenten (32, 34) ausgebildeten zweiten Langloch (58) dient.

6. Dreipunkt-Kraftheber nach wenigstens einem der Ansprüche 2 bis 5, **dadurch gekennzeichnet, dass** die beiden Montagewangen (40, 42) der Halterung (38) im Bereich eines den Unterlenker (16) zumindest einseitig umgreifenden Brückenabschnitts (94) starr miteinander verbunden sind.

7. Dreipunkt-Kraftheber nach Anspruch 6, **dadurch gekennzeichnet, dass** die Halterung (38) einschließlich des Brückenabschnitts (94) eine mit einer Außenkontur des Unterlenkers (16) korrespondierende Innenkontur derart aufweist, dass diese beim Verschieben des Lagerbolzens (44) innerhalb des Längsschlitzes (48) entlang des Unterlenkers (16) geführt wird.

8. Dreipunkt-Kraftheber nach wenigstens einem der Ansprüche 2 bis 7, **dadurch gekennzeichnet, dass** die Halterung (38) als aus einer Stahllegierung bestehendes einstückiges Guss- und/oder Schmiedeteil ausgebildet ist.

9. Dreipunkt-Kraftheber nach wenigstens einem der Ansprüche 2 bis 8, **dadurch gekennzeichnet, dass** sich der Arretierungsbolzen (46) erst nach Lösen eines Sicherungselements (84) aus der Halterung (38) entfernen lässt.

10. Landwirtschaftlicher Traktor mit einem Dreipunkt-Kraftheber (10) nach wenigstens einem der Ansprüche 1 bis 9.

## Claims

1. Three-point hitch for an agricultural tractor, comprising a hydraulically actuatable lifting arm (14), a lower link (16) which is configured to be vertically pivotable and a lifting strut (20) which is arranged therebetween for transmitting to the lower link (16) a pivoting movement performed on the lifting arm (14), wherein the lifting strut (20) has a first fastening portion (24) which is articulated to the lifting arm (14) and a second fastening portion (26) which is articulated to the lower link (16) and which has first and second fastening segments (32, 34) which encompass the lower link (16) in a fork-shaped manner, **characterized in that** a bearing pin (44) running between the two fastening segments (32, 34) extends through a slot (48) formed in the lower link (16) such that by pivoting the lower link (16) the bearing pin (44) is displaced inside the slot (48) between a first working position (52) and a second working position (54) and in each case may be secured therein by means of a blocking arrangement (36).

2. Three-point hitch according to Claim 1, **characterized in that** the blocking arrangement (36) has a holder (38) with mounting cheeks (40, 42) running on either side of the lower link (16), the bearing pin (44) and a blocking pin (46) spaced apart therefrom being inserted through said mounting cheeks, wherein the spacing between the bearing pin (44) and the blocking pin (46) corresponds to the dimensions of the slot (48) such that in the first working position (52) the bearing pin (44) bears substantially without play against a first end region (78) of the slot (48) and the blocking pin (46) bears substantially without play against a second end region (80) of the slot (48).

3. Three-point hitch according to Claim 2, **characterized in that** in the second working position (54) the bearing pin (44) bears substantially without play against the second end region (80) of the slot (48) and at the same time the blocking pin (46) is inserted through a blocking bore (82) configured in the lower link (16).

4. Three-point hitch according to Claim 2 or 3, **characterized in that** the slot (48) which is arranged in the lower link (16) is configured as a first elongated hole (56), the bearing pin (44) being guided therein substantially without play when the holder (38) is displaced between the two working positions (52, 54) .

5. Three-point hitch according to Claim 4, **characterized in that** the bearing pin (44) serves at the same time for mounting the lower link (16) in a second elongated hole (58) which is configured in the fastening segments (32, 34).

6. Three-point hitch according to at least one of Claims 2 to 5, **characterized in that** the two mounting cheeks (40, 42) of the holder (38) are rigidly connected together in the region of a bridge portion (94) encompassing the lower link (16) at least on one side.

7. Three-point hitch according to Claim 6, **characterized in that** the holder (38) including the bridge portion (94) has an inner contour corresponding to an outer contour of the lower link (16) such that this inner contour is guided along the lower link (16) when the bearing pin (44) is displaced inside the slot (48) .

8. Three-point hitch according to at least one of Claims 2 to 7, **characterized in that** the holder (38) is configured as an integral cast part and/or forged part consisting of a steel alloy.

9. Three-point hitch according to at least one of Claims 2 to 8, **characterized in that** the blocking pin (46) is only able to be removed from the holder (38) after releasing a securing element (84).

10. Agricultural tractor having a three-point hitch (10) according to at least one of Claims 1 to 9.

## Revendications

1. Relevage à trois points pour un tracteur agricole, avec un bras de levage (14) actionnable hydrauliquement, un bras inférieur (16) réalisé de manière à pouvoir pivoter verticalement et une barre de levage (20) agencée entre les deux pour transmettre au bras inférieur (16) un mouvement de pivotement exécuté sur le bras de levage (14), la barre de levage (20) présentant une première section de fixation (24) articulée sur le bras de levage (14) et une deuxième section de fixation (26) articulée sur le bras inférieur (16) avec des premier et deuxième segments de fixation (32, 34) qui entourent le bras inférieur (16) en forme de fourche, **caractérisé en ce qu'**un boulon de palier (44) s'étendant entre les segments de fixation (32, 34) s'étend à travers une fente longitudinale (48) réalisée dans le bras inférieur (16), **en ce que** le boulon de palier (44) peut être déplacé à l'intérieur de la fente longitudinale (48) entre une première position de travail (52) et une deuxième position de travail (54) en faisant pivoter le bras inférieur (16) et peut être fixé dans chacune au moyen d'un agencement de blocage (36).

2. Relevage à trois points selon la revendication 1, **caractérisé en ce que** l'agencement de blocage (36) présente un support (38) avec des joues de montage (40, 42) s'étendant des deux côtés du bras inférieur (16), à travers lesquelles sont enfilés le boulon de palier (44) ainsi qu'un boulon de blocage (46) espacé de celui-ci, la distance entre le boulon de palier (44) et le boulon de blocage (46) correspondant aux dimensions de la fente longitudinale (48) de telle sorte que, dans la première position de travail (52), le boulon de palier (44) s'applique essentiellement sans jeu contre une première zone d'extrémité (78) de la fente longitudinale (48) et le boulon de blocage (46) contre une deuxième zone d'extrémité (80) de la fente longitudinale (48).

3. Relevage à trois points selon la revendication 2, **caractérisé en ce que**, dans la deuxième position de travail (54), le boulon de palier (44) s'applique essentiellement sans jeu contre la deuxième zone d'extrémité (80) de la fente longitudinale (48) et le boulon de blocage (46) est en même temps enfilé à travers un perçage de blocage (82) réalisé dans le bras inférieur (16) .

4. Relevage à trois points selon la revendication 2 ou 3, **caractérisé en ce que** la fente longitudinale (48) agencée dans le bras inférieur (16) est réalisée sous forme de premier trou oblong (56) à l'intérieur duquel le boulon de palier (44) est guidé essentiellement sans jeu lors du déplacement du support (38) entre les deux positions de travail (52, 54).

5. Relevage à trois points selon la revendication 4, **caractérisé en ce que** le boulon de palier (44) sert en même temps au montage du bras inférieur (16) dans un deuxième trou oblong (58) réalisé dans les segments de fixation (32, 34) .

6. Relevage à trois points selon au moins l'une quelconque des revendications 2 à 5, **caractérisé en ce que** les deux joues de montage (40, 42) du support (38) sont reliées rigidement entre elles dans la zone d'une section de pont (94) entourant au moins d'un côté le bras inférieur (16).

7. Relevage à trois points selon la revendication 6, **caractérisé en ce que** le support (38), y compris la section de pont (94), présente un contour intérieur correspondant à un contour extérieur du bras inférieur (16) de telle sorte que celui-ci est guidé le long du bras inférieur (16) lors du déplacement du boulon de palier (44) à l'intérieur de la fente longitudinale (48).

8. Relevage à trois points selon au moins l'une quelconque des revendications 2 à 7, **caractérisé en ce que** le support (38) est réalisé sous forme de pièce moulée et/ou forgée d'un seul tenant constituée d'un alliage d'acier.

9. Relevage à trois points selon au moins l'une quelconque des revendications 2 à 8, **caractérisé en ce que** le boulon de blocage (46) ne peut être retiré du support (38) qu'après avoir desserré un élément de sécurité (84).

10. Tracteur agricole avec un relevage à trois points (10) selon au moins l'une quelconque des revendications 1 à 9.
